# FASCICULE DE BREVET EUROPEEN

(11) **EP 0 371 848 B1**
(45) Date de publication et mention de la délivrance du brevet: **05.05.1993**
(21) Numéro de dépôt: 89403183.0
(22) Date de dépôt: 20.11.1989
(51) Int. Cl.: A23K 3/03

(54) **Conservateur d'ensilage**
Konservierungsmittel für Silage
Silage preservative

(30) Priorité: 25.11.1988 FR 8815461
(43) Date de publication de la demande: 06.06.1990
(73) Titulaire: C.F.P.R. COMPAGNIE FINANCIERE ET DE PARTICIPATIONS ROULLIER, F-35400 Saint-Malo (FR)
(72) Inventeur: Helias, Pierre, F-35400 Saint-Malo (FR); Maigret, Alain, F-35350 Saint-Meloir-Des-Ondes (FR)
(74) Mandataire: Portal, Gérard

(56) Documents cités:
- EP-A- 0 275 958
- BE-A- 569 234
- DE-C- 953 765
- FR-A- 916 504
- FR-A- 2 546 039
- US-A- 4 015 018
- DERWENT FILE SUPPLIER WPI, 1973, AN no. 73-59364U (40), Derwent Publications Ltd, Londres, GB; & SU-A-366 850 (POLTAVA PIG BREEDING RES)

## Description

La présente invention a pour objet un nouveau conservateur d'ensilage.

On sait que l'ensilage est un moyen permettant de conserver le fourrage dans le but de fournir aux animaux, en période hivernale, un fourrage qui ait gardé les mêmes caractéristiques alimentaires que le fourrage vert.

Pour cela, le fourrage ensilé ne doit être le siège d'aucune fermentation dommageable comme par exemple une putréfaction ou une fermentation butyrique, afin d'éviter toute perte de valeur nutritive ou fourragère.

Pour atteindre cet objectif, on utilise depuis très longtemps des conservateurs chimiques qui peuvent être déposés sur le fourrage vert avant l'ensilage et/ou introduit dans les silos avec les matières végétales à ensiler.

On distingue actuellement trois grandes catégories de conservateurs d'ensilage qui se distinguent notamment en fonction de leur mode d'action.

La première catégorie comprend le sel (chlorure de sodium) qui agit en diminuant l'activité de l'eau (aw). Ainsi, les microorganismes, responsables des fermentations, ont du mal à se développer par manque d'eau.

La seconde catégorie est constituée par les conservateurs biologiques qui agissent en favorisant le développement de la fermentation lactique au détriment des autres fermentations qui sont dommageables. Les bactéries lactiques transforment le sucre présent dans les ensilages, ou éventuellement rajouté à ces derniers, pour en faire de l'acide lactique. Lorsque la fermentation lactique se développe suffisamment rapidement, on observe une baisse du pH jusqu'aux environs de la valeur 4, et cette acidité empêche le développement des autres fermentations.

Enfin, la troisième catégorie est constituée par les conservateurs acides qui sont ajoutés au fourrage de façon à abaisser très rapidement le pH à une valeur généralement inférieure à 4. L'acidité étant rapidement obtenue, les sucres, protéines et autres éléments nutritifs du fourrage ne sont que peu affectés.

Dans cette dernière catégorie, de nombreux acides et combinaisons d'acides organiques et inorganiques, liquides ou solides, ont déjà été utilisés pour la préparation des conservateurs.

Parmi les acides liquides généralement utilisés, on peut mentionner l'acide phosphorique, l'acide sulfurique, l'acide chlorhydrique, l'acide formique, l'acide acétique, l'acide propionique, etc.

Parmi les acides solides utilisés, on peut citer notamment l'acide citrique et les sels d'acides organiques en général.

En outre, on a également utilisé des conservateurs se présentant sous forme particulaire, généralement obtenus par adsorption d'au moins un acide liquide sur un support inerte. Par exemple, le document FR-2 403 749 préconise l'utilisation d'acide propionique liquide adsorbé sur un véhicule particulaire à base de silicium et d'aluminium.

De même, le document FR-2 368 228 suggère l'utilisation d'un mélange d'acides liquides (acétique, fumarique, déhydroacétique) adsorbé sur un support inerte comme par exemple de la farine, du kaolin ou de la terre de diatomées.

De même encore, le document FR-2 148 614 décrit l'utilisation d'acide propionique liquide fixé sur la silice ou des silicates.

Cependant, l'utilisation des conservateurs acides pose le problème grave de la corrosion du matériel agricole utilisé pour l'ensilage.

Diverses solutions ont été proposées pour surmonter les problèmes de corrosion dus à l'utilisation d'acide.

C'est ainsi que selon le document FR-2 422 731, il est suggéré d'ajouter au conservateur acide un agent anti-corrosion spécifique tel qu'un phosphoaminolipide comme notamment la lécithine.

Selon les documents FR-2 365 965 et 2 287 857 il est proposé d'utiliser respectivement des mélanges de propionate d'ammonium et de propylène glycol ou d'urée et d'acide propionique.

Enfin, selon le document FR-2 366 802, il est suggéré d'utiliser des furane et thiophène.

Selon le document DE 953765, il est encore proposé d'utiliser mélange de sels d'acides forts avec une huile grasse séchante.

Cependant, ces solutions s'avèrent généralement soit coûteuses, soit insuffisantes pour parvenir à l'objectif fixé.

La présente invention a donc pour but de résoudre le problème technique consistant en la fourniture d'un nouveau conservateur d'ensilage, peu coûteux, qui puisse être utilisé de façon aisée sans aucun problème de corrosion pour le matériel agricole utilisé pour l'ensilage.

La solution, conforme à la présente invention pour résoudre ce problème technique consiste en un conservateur d'ensilage caractérisé en ce qu'il se présente sous la forme de granulés susceptibles d'être obtenus par compactage et broyage subséquent d'une poudre comprenant du bisulfate de sodium en mélange avec au moins une matière compactable de qualité alimentaire.

De préférence, on choisira comme matière compactable une matière de densité telle qu'elle permette d'enrober le bisulfate et de le rendre moins hygroscopique et moins corrosif. Cette densité sera avantageusement inférieure à 0,6 g/cm³.

Comme matière compactable de qualité alimentaire répondant à ces exigences, on peut citer par exemple le jus lactosé déshydraté, la farine, le son, des protéines solubles, du sérum déshydraté, de la poudre de lait.

On comprend ainsi, que selon l'invention, on utilise un sel partiel d'acide minéral fort, sous forme d'un granulé, obtenu par enrobage avec une matière alimentaire qui constitue une source supplémentaire de calories pour l'alimentation des animaux.

Selon une caractéristique particulière de l'invention, le rapport en poids du bisulfate de sodium à la matière compactable, dans la poudre précitée varie de 1:0,5 à 1:2, et est de préférence de 1:0,6.

Selon un mode de réalisation préféré, la poudre permettant de préparer un conservateur d'ensilage selon l'invention comprend en outre du sel, afin d'augmenter l'appétence.

Selon une variante de réalisation, cette poudre peut contenir également du sulfate de cuivre qui évite les carences en cuivre entraînées par l'adsorption d'acide minéral.

Selon l'invention, les granulés présentent un diamètre d'environ 0,05 à 5 mm, et de préférence de 0,5 à 3 mm.

Ces granulés permettent donc un épandage mécanique plus facile du conservateur, et ne risquent pas d'être entraînés au vent.

En outre, il n'y a aucun risque de toxicité cutanée pour les utilisateurs.

D'une façon générale, un conservateur d'ensilage selon l'invention sera réalisé à partir d'une poudre ayant la composition en poids suivante :
- Bisulfate de sodium 20 à 70 %
- Matière de qualité alimentaire 30 à 80 %
- Chlorure de sodium 0 à 40 %
- Sulfate de cuivre 0 à 2 %

Dans un mode actuellement préféré de réalisation de l'invention, cette poudre a la composition en poids suivante :
- Bisulfate de sodium 50 %
- Jus lactosé déshydraté 30%
- Chlorure de sodium 20 %

Le procédé de préparation d'un conservateur d'ensilage conforme à l'invention comporte généralement le mélange des matières premières, le compactage et le broyage sous forme de granulés dont les dimensions ont été mentionnées ci-dessus.

L'invention sera illustrée par l'exemple détaillé suivant :

On mélange les produits suivants dans les pourcentages en poids indiqués.
- Bisulfate de sodium 50 %
- Jus lactosé déshydraté 30 %
- Chlorure de sodium 20 %

Ce mélange est tout d'abord broyé en particules de dimension inférieure à 1 mm.

Puis on réalise un compactage sous forme de galettes de grandes dimensions et un broyage par exemple au moyen de plusieurs broyeurs successifs.

Les éléments trop fins (diamètre des particules inférieur de préférence à 1 mm) sont recompactés tandis que les éléments trop grossiers (diamètre des particules supérieur de préférence à 3 mm) sont broyés à nouveau.

On observe, et c'est ce qui fait l'originalité de l'invention, que la différence de densité entre la matière alimentaire et le bisulfate de sodium, permet de "diluer" ce dernier dans le jus lactosé et ainsi de réduire la surface de contact de l'acide. En outre, la granulation et le criblage réduisent la surface spécifique par rapport au bisulfate pur. On restreint par conséquent les risques de toxicité cutanée pour l'utilisateur.

Des essais ont été réalisés pour vérifier l'efficacité de ce conservateur d'ensilage sur la conservation et la qualité bactériologique des ensilages d'herbe. La qualité de conservation est bonne à excellente dans tous les cas.

En outre, on constate que la qualité bactériologique est améliorée en surface, que le pourcentage d'azote soluble est réduit dans le silo et que la teneur en acide acétique est également réduite.

En suivant le protocole expérimental décrit ci-dessus, on a réalisé un conservateur en mélangeant au départ les produits suivants, dans les pourcentages en poids indiqués :
- Bisulfate de sodium 40 %
- Jus lactosé déshydraté 40 %
- Chlorure de sodium 19 %
- Sulfate de cuivre 1 %

Des conservateurs variés ont été également réalisés en remplaçant notamment le jus lactosé par d'autres matières alimentaires de qualité alimentaire. Un excellent compactage est possible dès lors que cette matière présente une densité inférieure à 0,6 g/cm³. Le résultat est d'autant meilleur que la densité est faible.

De même, les pourcentages relatifs en poids des différents constituants de la poudre (avant compactage) peuvent varier dans de larges gammes de valeurs qui ont été mentionnées précédemment.

## Revendications

1. Conservateur d'ensilage, caractérisé en ce qu'il se présente sous la forme de granulés susceptibles d'être obtenus par compactage et broyage subséquent d'une poudre comprenant du bisulfate de sodium en mélange avec une matière compactable de qualité alimentaire.

2. Conservateur d'ensilage selon la revendication 1, caractérisé en ce que la matière compactable de qualité alimentaire précitée a une densité inférieure à 0,6 g/cm³.

3. Conservateur d'ensilage selon la revendication 1 ou 2, caractérisé en ce que la matière compactable de qualité alimentaire précitée est choisie parmi le jus lactosé déshydraté, la farine, le son, des protéines solubles, du sérum déshydraté, de la poudre de lait.

4. Conservateur d'ensilage selon l'une des revendications 1 à 3, caractérisé en ce que le rapport en poids du bisulfate de sodium à la matière compactable dans la poudre précitée varie de 1:0,5 à 1:2 et est de préférence de 1:0,6.

5. Conservateur d'ensilage selon l'une des revendications 1 à 4, caractérisé en ce que la poudre précitée comprend en outre du sel.

6. Conservateur d'ensilage selon l'une des revendications précédentes, caractérisé en ce que la poudre précitée comprend en outre du sulfate de cuivre.

7. Conservateur d'ensilage selon l'une des revendications précédentes, caractérisé en ce que les granulés précités ont un diamètre compris entre 0,05 et 5 mm, et de préférence entre 0,5 et 3 mm.

8. Conservateur d'ensilage selon l'une des revendications 1 à 7, caractérisé en ce que la poudre précitée a la composition suivante en poids :
- Bisulfate de sodium 20 à 70 %
- Jus lactosé déshydraté 30 à 80 %
- Chlorure de sodium 0 à 40 %
- Sulfate de cuivre 0 à 2 %

9. Conservateur d'ensilage selon l'une des revendications 1 à 8, caractérisé en ce que la poudre précitée a la composition suivante :
- Bisulfate de sodium 50 %
- Jus lactosé déshydraté 30 %
- Chlorure de sodium 20 %

## Patentansprüche

1. Konservierungsmittel für Silage,
dadurch gekennnzeichnet,
daß es die Form von Körnern aufweist, die durch Kompaktieren und nachfolgendes Zerkleinern eines Pulvers erhältlich sind, das Natriumbisulfat in Mischung mit einem kompaktierbaren Stoff von Nahrungsmittelqualität aufweist.

2. Konservierungsmittel für Silage nach dem Anspruch 1, dadurch gekennzeichnet, daß der vorgenannte kompaktierbare Stoff von Nahrungsmittelqualität eine Dichte unter 0,6 g/cm³ hat.

3. Konservierungsmittel für Silage nach dem Anspruch 1 oder 2, dadurch gekennzeichnet, daß der vorgenannte kompaktierbare Stoff von Nahrungsmittelqualität unter dem entwässerten Laktosesaft, dem Mehl, der Kleie, den löslichen Proteinen, der entwässerten Molke, dem Milchpulver gewählt wird.

4. Konservierungsmittel für Silage nach einem der Ansprüche 1 bis 3, dadurch gekennzeichnet, daß das Gewichtsverhältnis des Natriumbisulfats zum kompaktierbaren Stoff im vorgenannten Pulver von 1:0,5 bis 1:2 variiert und vorzugsweise 1:0,6 ist.

5. Konservierungsmittel für Silage nach einem der Ansprüche 1 bis 4, dadurch gekennzeichnet, daß das vorgenannte Pulver außerdem Salz enthält.

6. Konservierungsmittel für Silage nach einem der vorstehenden Ansprüche, dadurch gekennzeichnet, daß das vorgenannte Pulver außerdem Kupfersulfat enthält.

7. Konservierungsmittel für Silage nach einem der vorstehenden Ansprüche, dadurch gekennzeichnet, daß die vorgenannten Körner einen Durchmesser im Bereich von 0,05 bis 5 mm und vorzugsweise von 0,5 bis 3 mm haben.

8. Konservierungsmittel für Silage nach einem der Ansprüche 1 bis 7, dadurch gekennzeichnet, daß das vorgenannte Pulver die folgende Gewichtszusammensetzung hat:
- Natriumbisulfat 20 bis 70 %
- entwässerter Laktosesaft 30 bis 80 %
- Natriumchlorid 0 bis 40 %
- Kupfersulfat 0 bis 2 %.

9. Konservierungsmittel für Silage nach einem der Ansprüche 1 bis 8, dadurch gekennzeichnet, daß das vorgenannte Pulver die folgende Zusammensetzung hat:
- Natriumbisulfat 50 %
- entwässerter Laktosesaft 30 %
- Natriumchlorid 20 %.

## Claims

1. Silage preserving agent, characterized in that it is in the form of granules which can be obtained by compacting and subsequent crushing of a powder containing sodium disulphate mixed with a compactable material suitable for use with foodstuffs.

2. Silage preserving agent according to claim 1, characterized in that said compactable material suitable for use with foodstuffs has a density below 0.6 g/cm3.

3. Silage preserving agent according to claim 1 or 2, characterized in that said compactable material suitable for use with foodstuffs is selected among the dehydrated lactose juice, flour, bran, soluble proteins, dehydrated serum, milk powder.

4. Silage preserving agent according to one of claims 1 to 3, characterized in that the weight ratio of the sodium disulphate to the compactable material in said powder varies between 1:0.5 to 1:2 and is preferably between 1:0.6.

5. Silage preserving agent according to one of claims 1 to 4, characterized in that said powder further contains salt.

6. Silage preserving agent according to one of the preceding claims, characterized in that said powder further contains copper sulphate.

7. Silage preserving agent according to one of the preceding claims, characterized in that said granules have a diameter comprised between 0.05 and 5 mm, and preferably between 0.5 and 3 mm.

8. Silage preserving agent according to one of claims 1 to 7, characterized in that the composition, by weight, of said powder is as follows:
- Sodium disulphate 20 to 70 %
- Dehydrated lactose juice 30 to 80 %
- Sodium chloride 0 to 40 %
- Copper sulphate 0 to 2 %

9. Silage preserving agent according to one of claims 1 to 8, characterized in that the composition of said powder is as follows:
- Sodium disulphate 50 %
- Dehydrated lactose juice 30 %
- Sodium chloride 20%
